(19) Europäisches Patentamt

European Patent Office

Office européen des brevets

(11) **EP 1 124 333 A2**

(12) **EUROPÄISCHE PATENTANMELDUNG**

(43) Veröffentlichungstag:
16.08.2001 Patentblatt 2001/33

(51) Int Cl.⁷: **H04B 1/18**, H04B 1/00

(21) Anmeldenummer: 01100185.6

(22) Anmeldetag: 17.01.2001

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: 09.02.2000 DE 10005605

(71) Anmelder: **Infineon Technologies AG**
**81669 München (DE)**

(72) Erfinder:
• **Menkhoff, Andreas, Dr.**
**81927 München (DE)**
• **Schöllhorn, Peter**
**83607 Holzkirchen (DE)**

(74) Vertreter: **Banzer, Hans-Jörg, Dipl.-Ing. et al**
**Kraus & Weisert**
**Patent- und Rechtsanwälte**
**Thomas-Wimmer-Ring 15**
**80539 München (DE)**

(54) **Analoge Vorstufe**

(57) Eine analoge Vorstufe, wie sie beispielsweise in Empfängern für Kommunikationsgeräte eingesetzt wird, umfaßt mehrere analoge Bauelemente (1-3), welche einem Analog/Digital-Wandler (4) vorgeschaltet sind. Zur genauen Aussteuerung der einzelnen analogen Bauelemente (1-3) kann der Eingang des Analog/Digital-Wandlers (4) über eine Umschalteinrichtung (8) wahlweise mit dem Ausgang eines beliebigen der analogen Bauelemente (1-3) verbunden und von einer digitalen Steuereinrichtung (5) durch Auswertung des dann von dem Analog/Digital-Wandler (4) gelieferten Abtastwerts ein Aussteuerungssignal für das betreffende analoge Bauelement (1-3) erzeugt werden.

Printed by Jouve, 75001 PARIS (FR)

## Beschreibung

Die vorliegende Erfindung betrifft eine analoge Vorstufe nach dem Oberbegriff des Anspruches 1.

Analoge Vorstufen ("Frontends"), wie sie beispielsweise in Telekommunikationsempfängern zum Einsatz kommen, umfassen verschiedene analoge Bauelemente, die vor einem Analog/Digital-Wandler angeordnet sind. Den analogen Bauelementen, die beispielsweise Verstärker oder Filter sein können, wird ein analoges Empfangssignals zugeführt, welches von den analogen Bauelementen verarbeitet wird, ehe es dem Analog/Digital-Wandler zur Abtastung und Digitalisierung zugeführt wird.

Eine exakte Aussteuerung der analogen Vorstufe ist bereits heute sehr wichtig und wird in Zukunft aus folgenden Gründen noch mehr Bedeutung erlangen.

Mit den immer kleiner werdenden Strukturbreiten von integrierten Schaltungen werden die Taktfrequenzen, welche auf diesen integrierten Schaltungen zum Einsatz kommen, immer stärker ansteigen. Dies hat zur Folge, daß die analogen Bauelemente von den auf der jeweiligen integrierten Schaltung befindlichen digitalen Komponenten bzw. den in unmittelbarer Nähe angeordneten integrierten Schaltungen immer stärker gestört werden. Es ist daher zu erwarten, daß die Störbeeinflussung durch Rauschen immer stärker ansteigt. Dagegen wird die Versorgungsspannung der analogen Bauelemente mit den immer kleiner werdenden Strukturbreiten abnehmen, so daß sich der Abstand zwischen dem zunehmenden Rauschanteil und der kleiner werdenden Versorgungsspannung verringert. Die immer kleiner werdenden Strukturbreiten haben zur Folge, daß die digitalen Komponenten immer kleiner werden. Da sich die analogen Bauelemente nicht in gleicher Weise verkleinern lassen, kommt ihnen eine immer größere Bedeutung zu. Daher ist es wichtig, die analogen Bauelemente in optimaler Weise auszusteuern, um die Implementierungsverluste möglichst gering zu halten.

Zur Aussteuerung der analogen Bauelemente, die nicht unmittelbar vor dem Analog/Digital-Wandler liegen, wurden bisher sogenannte Peak-Detektoren verwendet. Jedesmal, wenn das analoges Signal eine bestimmte Schwelle überschreitet, wird dieses von den Peak-Detektoren wahrgenommen. Übersteigt die Anzahl der von den Peak-Detektoren innerhalb eines festgelegten Zeitintervalls erfaßten Peaks einen bestimmten Grenzwert, wird die Aussteuerung der analogen Bauelemente verringert. Wird von den Peak-Detektoren hingegen eine zu geringer Anzahl von Peaks erfaßt, wird die Aussteuerung der analogen Bauelemente erhöht.

Die Aussteuerung der analogen Vorstufe bzw. der entsprechenden analogen Bauelemente mit Hilfe von Peak-Detektoren weist jedoch mehrere Probleme auf.

Zum einen ist der Bereich zwischen dem weitgehend linearen Verhalten der analogen Vorstufe und der durch die Amplitudenbegrenzung hervorgerufenen Signalverzerrung fließend. Das heißt es gibt Bereiche, in denen das analoge Signal vor den analogen Bauelementen überhaupt nicht verzerrt, ein wenig verzerrt, stärker verzerrt und sehr stark verzerrt wird. Mit den zuvor beschriebenen Peak-Detektoren kann jedoch nur eine diese Schwellen abgefragt bzw. überwacht werden. Diese Schwelle müßte jedoch in Abhängigkeit von dem Amplitudenhistogramm des analogen Eingangssignals verändert werden, um die analoge Vorstufe optimal aussteuern zu können. Bei einem satellitengestützten Empfang von digitalen Fernsehsignalen unterscheidet sich jedoch beispielsweise das Amplitudenhistogramm eines reinen QPSK-Signals ("Quadrature Phase Shift Keying") relativ stark von demjenigen eines SCPC-Signals ("Single Carrier Per Channel").

Wie zuvor beschrieben worden ist, registrieren die Peak-Detektoren das Überschreiten einer vorgegebenen Signalamplitude in einem Bereich, in dem das analoge Signal von der analogen Vorstufe mehr oder weniger stark verzerrt wird. Es ist selbstverständlich, daß dieses Überschreiten nur sehr selten stattfinden darf, damit die Gesamtverzerrung des analogen Signals hinreichend klein ist. Die Peak-Detektoren sollten bezogen auf den Takt des Analog/Digital-Wandlers etwa in der Größenordnung jedes 10.000-ten Abtastwerts einmal auslösen, so daß jeweils nach 10.000 Abtastwerten eine Aussteuerung der analogen Bauelemente durchgeführt wird. Dies hat jedoch zur Folge, daß die Meßperioden sehr lang werden und die Varianz der Messung relativ groß ist.

Der vorliegenden Erfindung liegt daher die Aufgabe zugrunde, eine analoge Vorstufe vorzuschlagen, bei der eine genauere Aussteuerung der analogen Bauelemente, insbesondere der nicht unmittelbar vor dem Analog/Digital-Wandler befindlichen analogen Bauelemente, mit nur geringem Mehraufwand durchgeführt werden kann.

Diese Aufgabe wird erfindungsgemäß durch eine analoge Vorstufe mit den Merkmalen des Anspruches 1 gelöst. Die Unteransprüche beschreiben jeweils bevorzugte und vorteilhafte Ausführungsformen der vorliegenden Erfindung.

Bei der erfindungsgemäßen Lösung wird ausgenützt, daß die üblicherweise in Form einer integrierten Schaltung ausgebildete analoge Vorstufe mit dem Analog/Digital-Wandler bereits ein sehr exaktes Meßinstrument zur Bestimmung vom Amplituden aufweist. Der Analog/Digital-Wandler kann wahlweise hinter jede Stufe, d. h. hinter jedes analoge Bauelement, der analogen Vorstufe geschaltet werden, um an den unterschiedlichen Schaltungsstellen den analogen Signalpegel zu messen. Das Ausgangssignal des Analog/Digital-Wandlers wird anschließend ausgewertet, um ein Aussteuerungssignal für das entsprechende analoge Bauelemente zu erzeugen.

In der Phase der Neueinpegelung der analogen Vorstufe kann zu diesem Zweck jeder Abtastwert des Analog/Digital-Wandlers benutzt werden, da in dieser Phase der Inhalt des analogen Empfangssignals uninteressant ist, so daß die analoge Vorstufe und damit das analoge Empfangssignal schnell und genau eingestellt werden kann. In der Phase des laufenden Betriebs ist hingegen in erster Linie der Inhalt des Empfangssignals von Interesse. Trotzdem müssen die Signalpegel der analogen Vorstufe überwacht werden, da sich die Empfangsbedingungen - beispielsweise durch Hinzuschalten oder Abschalten vor Nachbarkanälen in dem entsprechenden Empfänger - jederzeit verändern können. Daher wird im laufenden Betrieb vorzugsweise nur jeder k-te Abtastwerts des Analog/Digital-Wandlers verwendet, um die Aussteuerung der analogen Vorstufe an unterschiedlichen Schaltungsstellen zu überprüfen. Der aufgrund dieser Maßnahme für das digitale Ausgangssignal fehlende Abtastwert kann durch Interpolation aus benachbarten Abtastwerten des Analog/Digital-Wandiers ermittelt werden.

Mit Hilfe der erfindungsgemäßen analogen Vorstufe kann somit jedes einzelne analoge Bauteil zuverlässig und exakt ausgesteuert werden. Es kann an jeder Stelle der analogen Vorstufe ein Histogramm etc. des analogen Eingangssignals bestimmt werden, um eine entsprechende Aussteuerung der analogen Bauelemente, welche den Pegel bzw. den Amplitudengang des analogen Eingangssignals verändern können, zu gewährleisten. Die Verwendung von Peak-Detektoren ist nicht erforderlich. Wird nicht auf die Spitzenwerte, sondern beispielsweise auf die Varianz des Eingangssignals geregelt, kann die Regelung bzw. Aussteuerung schneller reagieren, da nicht jeder 10.000-te Abtastwert, sondern bereits jeder k-te Abtastwert, die zur Aussteuerung erforderliche Amplitudeninformation enthält.

Die Erfindung eignet sich im Prinzip zur genauen Aussteuerung jeder beliebig ausgestalteten analogen Vorstufe ("Frontend"). Insbesondere ist die vorliegende Erfindung jedoch für analoge Vorstufe geeignet, wie sie in Empfängern für Telekommunikationsanwendungen, beispielsweise Kabelmodems, verwendet werden.

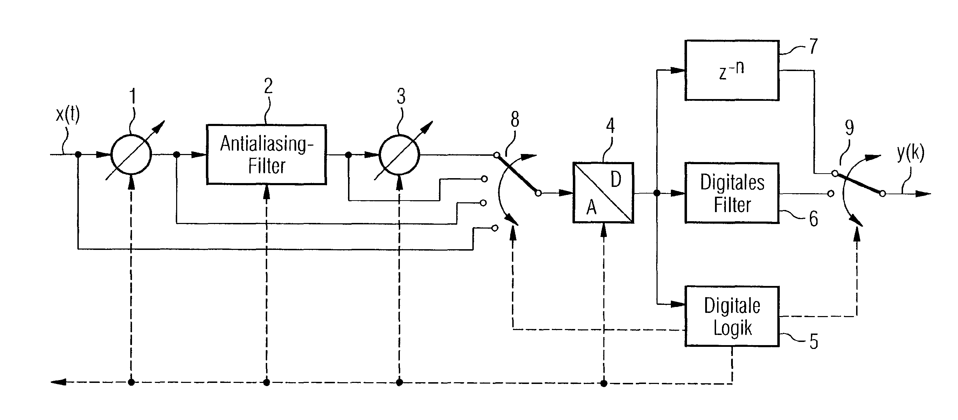

Die Erfindung wird nachfolgend näher anhand eines bevorzugten Ausführungsbeispiels unter Bezugnahme auf die beigefügte Zeichnung erläutert.

Dabei zeigt die einzige Figur den Aufbau einer erfindungsgemäßen analogen Vorstufe in Form eines Blockschaltbilds.

Die analoge Vorstufe empfängt ein analoges Signal x(t), welches einem Signalverarbeitungspfad mit mehreren analogen Bauelementen zugeführt wird. Bei dem dargestellten Ausführungsbeispiel durchläuft das analoge Eingangssignal x(t) in diesem Signalverarbeitungspfad einen Verstärker 1, einen Antialiasing-Filter 2 sowie einen weiteren Verstärker 3, ehe es über einen Umschalter 8 einem Analog/Digital-Wandler 4 zur Abtastung und Digitalisierung zugeführt wird.

Der Analog/Digital-Wandler 4 kann über den Umschalter 8 an jedes Glied dieses Signalverarbeitungspfads geschaltet werden. Insbesondere kann der Analog/Digital-Wandler 4 mit Hilfe des Umschalters 8 hinter jedes einzelne analoge Bauelement 1 - 3 der analogen Vorstufe, welches den Pegel bzw. den Amplitudengang des analogen Eingangssignals verändert, geschaltet werden. Mit dem Ausgang des Analog/Digital-Wandlers 4 ist eine digitale Logikschaltung 5 verbunden, welche die von dem Analog/Digital-Wandler gelieferten Abtastwerte auswertet, um davon abhängig Aussteuerungssignale für die einzelnen analogen Bauelemente 1 - 3 zu erzeugen.

In der Phase der Neueinpegelung der analogen Vorstufe ist der Inhalt des analogen Empfangssignals x(t) uninteressant. Während dieser Phase kann die digitale Logikschaltung 5 daher jeden Abtastwert des Analog/Digital-Wandlers 4 zur Erzeugung eines Aussteuerungssignals verwenden. Zu diesem Zweck wird der Umschalter 8 von der digitalen Logikschaltung 5 abwechselnd in die dargestellten unterschiedlichen Stellungen geschaltet, so daß von dem Analog/Digital-Wandler 4 der Pegel des analogen Empfangssignals x(t) an den unterschiedlichen Schaltungsstellen der analogen Vorstufe gemessen wird und die von dem Analog/Digital-Wandler 4 gelieferten Abtastwerte von der digitalen Logikschaltung 5 zur Erzeugung entsprechender Aussteuerungssignale ausgewertet werden.

In der Phase des laufenden Betriebs ist hingegen in erster Linie der Inhalt des analogen Empfangssignals x(t) interessant. Um jedoch auch während dieser Phase die einzelnen analogen Bauelemente 1 - 3 der analogen Vorstufe kontinuierlich aussteuern zu können, wird während dieser Phase lediglich jeder k-te Abtastwert des Analog/Digital-Wandlers 4 ausgewertet, um die Aussteuerung der analogen Vorstufe an unterschiedlichen Schaltungsstellen zu überprüfen. Die für die Überprüfung jeweils gewünschte Schaltungsstelle wird durch die digitale Logikschaltung 5 wiederum über den Umschalter 8 mit dem Eingang des Analog/Digital-Wandlers 4 verbunden.

Bei dieser Vorgehensweise tritt jedoch das Problem auf, daß der zur Aussteuerung verwendete Abtastwert des Analog/Digital-Wandlers 4 nicht für das digitale Ausgangssignal y(k) zur Verfügung steht. Der für das digitale Ausgangssignal y(k) somit fehlende Abtastwert kann jedoch durch Interpolation aus den benachbarten Abtastwerten berechnet werden. Zu diesem Zweck ist mit dem Ausgang des Analog/Digital-Wandlers 4 ein digitales Filter 6 gekoppelt, welches die zuvor vorbeschriebene Interpolation durchführt. Darüber hinaus ist mit dem Ausgang des Analog/Digital-Wandlers 4 eine digitale Verzögerungsschaltung 7 der Ordnung n gekoppelt, welche die Gruppenlaufzeit des digitalen Filters 6 ausgleicht. Die Ausgänge des digitalen Filters 6 und der Verzögerungsschaltung 7 sind über einen weiteren Schalter 9 mit dem Ausgang der analogen Vorstufe verbunden. Der Schalter 9 wird von der digitalen Logikschaltung 5 derart angesteuert, daß der Ausgang der analogen Vorstufe im normalen Betrieb über die digitale Verzögerungsschaltung 7 mit dem Ausgang des Analog/Digital-Wandlers 4 verbunden ist, während im Aussteuerungsbetrieb der Ausgang der analogen Vorstufe über das digitale Filter 6 mit dem Ausgang des Analog/Digital-Wandlers 4 verbunden ist, um eine interpolierten Abtastwert für das digitale Ausgangssignal y(k) auszugeben. Am Ausgang der analogen Vorstufe kann somit das digitale Ausgangssignal y(k) kontinuierlich abgegriffen werden.

Das digitale Filter 6 kann beispielsweise bei einer digitalen Verzögerungsschaltung 7, welches die Übertragungsfunktion $z^{-4}$ aufweist, die Übertragungsfunktion

$$H(z)= -1 + 9^*z^{-1} - 24^*z^{-2} + 40^*z^{-3} + 40^*z^{-5} - 24^*z^{-6} + 9^*z^{-7} - z^{-8}$$

aufweisen.

**Patentansprüche**

1. Analoge Vorstufe,

mit mehreren analogen Bauelementen (1-3), welchen ein analoges Eingangssignal (x(t)) zugeführt ist,
mit einem den analogen Bauelementen (1-3) nachgeschalteten Analog/Digital-Wandler (4) zur Umsetzung des durch die analogen Bauelemente (1-3) verarbeiteten analogen Eingangssignals (x(t)) in ein digitales Ausgangssignal (y(k)), und
mit einer Steuereinrichtung (5) zum Aussteuern der analogen Bauelemente (1-3),
**dadurch gekennzeichnet**,
daß eine Umschalteinrichtung (8) vorgesehen ist, um den Eingang des Analog/Digital-Wandlers (4) wahlweise mit dem Ausgang eines der analogen Bauelemente (1-3) zu verbinden, und daß die Steuereinrichtung (5) derart ausgestaltet ist, daß sie durch Auswertung des digitalen Ausgangssignals des Analog/Digital-Wandlers (4) Aussteuerungssignale für die analogen Bauelemente (1-3) erzeugt.

2. Analoge Vorstufe nach Anspruch 1,
**dadurch gekennzeichnet**,
daß die Steuereinrichtung (5) derart ausgestaltet ist, daß sie ein Steuersignal für die Umschalteinrichtung (8) erzeugt, um den Eingang des Analog/Digital-Wandlers (4) mit dem Ausgang eines der analogen Bauelemente (1-3) zu verbinden.

3. Analoge Vorstufe nach Anspruch 2,
**dadurch gekennzeichnet**,
daß die Steuereinrichtung (5) derart ausgestaltet ist, daß sie durch Auswertung des digitalen Ausgangssignals des Analog/Digital-Wandlers (4) ein Aussteuerungssignal für dasjenige analoge Bauelement (1-3) erzeugt, dessen Ausgang über die Umschalteinrichtung (8) mit dem Eingang des Analog/Digital-Wandlers (4) verbunden ist.

4. Analoge Vorstufe nach einem der vorhergehenden Ansprüche,
**dadurch gekennzeichnet**,
daß die Steuereinrichtung (5) derart ausgestaltet ist, daß sie während einer Neueinpegelungsphase der analogen Vorstufe jeden Abtastwert des digitalen Ausgangssignals des Analog/Digital-Wandlers (4) zur Erzeugung der Aussteuerungssignale für die analogen Bauelemente (1-3) auswertet.

5. Analoge Vorstufe nach einem der vorhergehenden Ansprüche,
**dadurch gekennzeichnet**,
daß die Steuereinrichtung (5) derart ausgestaltet ist, daß sie während des normalen Betriebs der analogen Vorstufe jeden k-ten Abtastwert des digitalen Ausgangssignals des Analog/Digital-Wandlers (4) zur Erzeugung der Aussteuerungssignale für die analogen Bauelemente (1-3) auswertet.

6. Analoge Vorstufe nach Anspruch 5,
**dadurch gekennzeichnet**,
daß mit dem Ausgang des Analog/Digital-Wandlers (4) eine digitale Interpolationseinrichtung (6) zur Ermittlung des dem analogen Eingangssignal (x(t)) entsprechenden k-ten Abtastwerts des digitalen Ausgangssignal (y(k)) durch Interpolation von zu dem k-ten Abtastwert benachbarten Abtastwerten des digitalen Ausgangssignals (y(k)) vorgesehen ist.

7. Analoge Vorstufe nach Anspruch 6,

**dadurch gekennzeichnet**,
daß die Interpolationseinrichtung in Form eines digitalen Filters (6) ausgestaltet ist.

8. Analoge Vorstufe nach einem der Ansprüche 5-7,
**dadurch gekennzeichnet**,

daß eine weitere Umschalteinrichtung (9) zur Umschaltung zwischen dem digitalen Ausgangssignal des Analog/Digital-Wandlers (4) und dem digitalen Ausgangssignal der digitalen Interpolationseinrichtung (6) vorgesehen ist,
wobei die Steuereinrichtung (5) derart ausgestaltet ist, daß sie während des normalen Betriebs der analogen Vorstufe für jeden k-ten Abtastwert des Analog/Digital-Wandlers (4) die weitere Umschalteinrichtung (9) auf den Ausgang der digitalen Interpolationseinrichtung (6) und für die übrigen Abtastwerte des Analog/Digital-Wandlers (4) auf den Ausgang des Analog/Digital-Wandlers (4) umschaltet, wobei am Ausgang der weiteren Umschalteinrichtung (9) das dem analogen Eingangssignal (x(t)) entsprechende digitale Ausgangssignal (y(k)) abgreifbar ist.

9. Analoge Vorstufe nach Anspruch 8,
**dadurch gekennzeichnet**,
daß ein Eingangsanschluß der weiteren Umschalteinrichtung (9) mit dem Ausgang der digitalen Interpolationseinrichtung (6) verbunden ist, während ein anderer Eingangsanschluß der weiteren Umschalteinrichtung (9) über eine digitale Verzögerungsschaltung (7) mit dem Ausgang des Analog/Digital-Wandlers (4) verbunden ist, wobei die digitale Verzögerungsschaltung (7) zur Ausgleichung der Gruppenlaufzeit der digitalen Interpolationseinrichtung (6) vorgesehen ist.

10. Analoge Vorstufe nach einem der vorhergehenden Ansprüche,
**dadurch gekennzeichnet**,
daß die Steuereinrichtung (5) in Form einer digitalen Logikschaltung ausgestaltet ist.

11. Analoge Vorstufe nach einem der vorhergehenden Ansprüche,
**dadurch gekennzeichnet**,
daß die durch die Aussteuerungssignale der Steuereinrichtung (5) ansteuerbaren analogen Bauelemente (1-3) derart sind, daß sie den Pegel und/oder Amplitudengang des analogen Eingangssignals verändern.

12. Analoge Vorstufe nach Anspruch 11,
**dadurch gekennzeichnet**,
daß die analogen Bauelemente mindestens einen aussteuerbaren Verstärker (1,3) und/oder mindestens ein aussteuerbares analoges Filter (2) umfassen.

x(t)

1

2 Antialiasing-Filter

3

8

4 A D

7 $z^{-n}$

6 Digitales Filter

5 Digitale Logik

9 y(k)